# FASCICULE DE BREVET EUROPEEN

(11) **EP 3 021 515 B1**
(45) Date de publication et mention de la délivrance du brevet: **26.06.2019**
(21) Numéro de dépôt: 15193877.6
(22) Date de dépôt: 10.11.2015
(51) Int. Cl.: H04L 9/06, H04L 9/32, G06F 11/10, H04L 1/00

(54) **AMÉLIORATION DE L'INTÉGRITÉ AUTHENTIQUE DE DONNÉES À L'AIDE DU DERNIER BLOC CHIFFRANT CES DONNÉES EN MODE CBC**
VERBESSERUNG DER AUTHENTISCHEN INTEGRITÄT VON DATEN ANHAND DES LETZTEN BLOCKS, DER DIESE DATEN IM CBC-MODUS CHIFFRIERT
ENHANCEMENT OF THE AUTHENTIC INTEGRITY OF DATA USING THE LAST BLOCK ENCRYPTING SAID DATA IN CBC MODE

(30) Priorité: 14.11.2014 FR 1461023
(43) Date de publication de la demande: 18.05.2016
(73) Titulaire: IDEMIA France, 92400 Courbevoie (FR)
(72) Inventeur: EL KHOURY, Jenny, 92700 Colombes (FR); FERAUD, Alban, 92700 Colombes (FR)
(74) Mandataire: Santarelli

(56) Documents cités:
- US-A1- 2004 017 913
- US-A1- 2006 285 684
- CHARANJIT S JUTLA: "Encryption Modes with Almost Free Message Integrity", INTERNATIONAL ASSOCIATION FOR CRYPTOLOGIC RESEARCH,, vol. 20000801:174658, 1 août 2000 (2000-08-01), pages 1-15, XP061000099,
- ICAO: "Machine Readable Travel Documents", MACHINE READABLE TRAVEL DOCUMENTS, ICAO, PAGE(S) 1 - 131 , 1 janvier 2006 (2006-01-01), XP007921660, ISBN: 92-9194-757-1 Extrait de l'Internet: URL:http://www.icao.int/publications/Docum ents/9303_p1_v2_cons_en.pdf
- Dr Arjan Durresi: "Secret Key Cryptography", Louisiana State University, Secret Key Cryptography Course 2007, CSC4601 S07, 1 janvier 2007 (2007-01-01), XP55251260, Extrait de l'Internet: URL:http://cs.iupui.edu/~durresi/CSC4601_0 7/6_4601_07_2.pdf [extrait le 2016-02-18]

## Description

### DOMAINE DE L'INVENTION

La présente invention concerne le domaine des communications et plus particulièrement celui des communications entre un module sécurisé et un dispositif externe lecteur dudit module sécurisé, typiquement entre une carte à circuit intégré (ou ICC pour « *Integrated Circuit Card* » voire UICC pour « *Universal ICC* », par exemple une carte à puce) ou un élément sécurisé (SE pour « *Secure Element* » ou eSE pour *« embedded SE* »), et un terminal lecteur de carte.

### CONTEXTE DE L'INVENTION

De nombreuses applications embarquées dans des cartes à circuit intégré ou éléments sécurisés communiquent avec le terminal lecteur au travers de canaux de communication protégés.

Dans le domaine des cartes à puce par exemple, le protocole connu sous le terme de « messagerie sécurisée » (« *secure messaging* ») et défini dans la norme ISO/IEC 7816 ou TR SAC v1.01 (*Technical Report* - *Supplemental Access Control v1.01)* est largement utilisé pour protéger les unités de données (APDU pour «*Application Protocol Data Unit*») sur le canal de communication. Ce mode de communication est par exemple utilisé pour les documents de voyage électroniques ou eMRTD (« *electronic Machine Readable Travel Documents* ») et est également connu sous l'appellation SCP03 (ou SCP02 dans sa version antérieure).

Le schéma de protection des données est dit en mode « chiffre et authentifie » (« *Encrypt then authenticate* » par exemple « *Encrypt-then-MAC* »). En pratique, les données sont chiffrées (ou encryptées) et signées pour assurer leur confidentialité, leur intégrité et leur authenticité, dans les deux sens de communication : carte vers terminal et terminal vers carte.

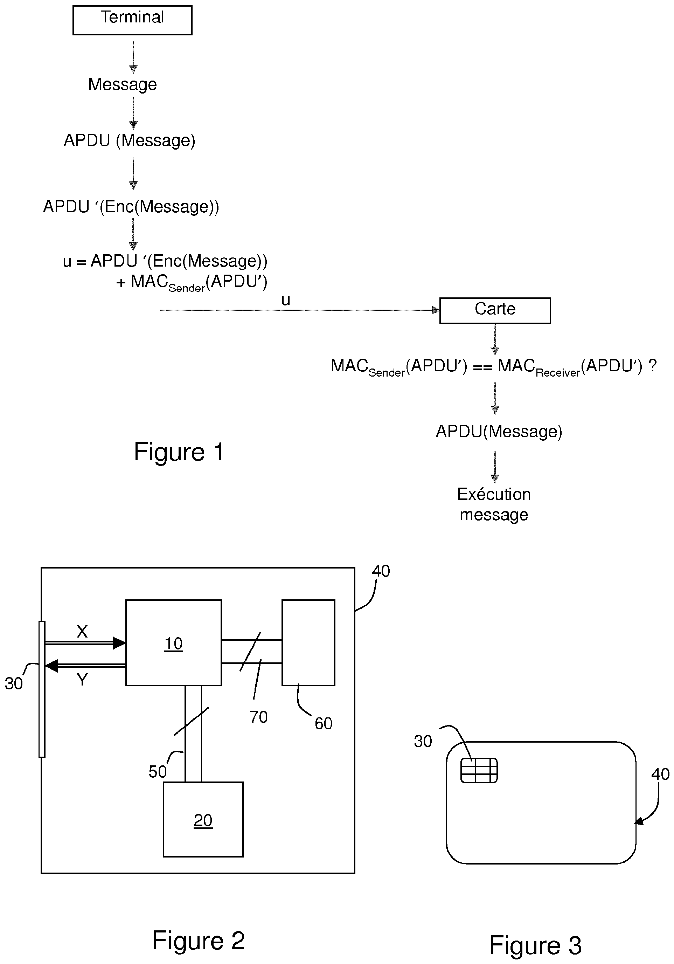

La **Figure 1** illustre la situation actuelle lors de la transmission d'une commande APDU depuis un terminal vers une carte à circuit intégré. Un canal sécurisé mettant en oeuvre le protocole *Secure Messaging* est initialement établi entre les deux entités conformément à la spécification ICAO 9303 ou ICAO TR SAC v1.01.

Dans cet exemple, le terminal prépare des données textuelles brutes (« Message ») à insérer dans la commande APDU à envoyer. Ces données textuelles brutes sont par exemple des données à mémoriser dans la carte pour une utilisation ultérieure (empreinte numérique à vérifier), à l'aide de la commande APDU de type PSO HASH.

Dans un exemple, prenons la commande APDU suivante (PSO HASH défini dans ISO/IEC 7816-8) :
CLA INS P1 P2 P3 [Message].
00 2A xx xx <Message> [Message]

Conformément au protocole *Secure Messaging*, les données textuelles brutes sont chiffrées résultant en une commande dénotée APDU'(Enc(Message)). A cette occasion, les entêtes de la commande APDU peuvent être modifiées pour notamment indiquer que la commande est en mode sécurisé et que les données sont chiffrées, d'où la notation APDU' et que l'APDU est signée (intégrité et authenticité) à l'aide d'un code d'authentification de message comme décrit ci-après.

Dans l'exemple précédent, la commande sécurisée suivante est par exemple obtenue :
CLA' INS P1 P2 P3' [Enc(Message)]

CLA ayant été modifié en CLA' pour indiquer ces modes sécuritaire et chiffré. P3 ayant pour sa part été modifié en P3', pour prendre en compte la nouvelle longueur des données.

Par ailleurs, la commande peut éventuellement être mise en forme selon une structure particulière comme par exemple :
- la structure du champ de données peut être modifiée (p.ex. encapsulation des données chiffrées dans des objets de données - ISO/IEC 7816-4) ;
- la donnée « Ne » peut être encapsulée dans un objet de données et adjoint au champ de donnée (ISO/IEC 7816-4).

Différents algorithmes de chiffrement peuvent être utilisés, typiquement un algorithme de chiffrement symétrique par blocs, par exemple AES (« *Advanced Encryption Standard* ») ou DES (« *Data Encryption Standard* »).

De même, un code d'authentification de message MAC_{Sender}(APDU') est calculé sur l'ensemble de la commande mise en forme (comme décrit précédemment), et qui peut comprendre l'en-tête APDU, et le message chiffrée. Le MAC est lui-même mis en forme (p.ex. encapsulation des données chiffrées dans des objets de données - ISO/IEC 7816-4) puis accolé au champ de données contenant le message chiffré avant que le message ne soit envoyé à la carte à circuit intégré sous forme de message 'u'.

A titre illustratif, un code d'authentification de message peut être calculé à l'aide de l'algorithme MAC impliquant l'utilisation d'une clé secrète. Le code d'authentification de message assure une fonction de vérification de l'intégrité du message mais également une fonction d'authentification de l'expéditeur, détenteur de la clé secrète.

A réception, l'application embarquée sur la carte et destinataire de la commande chiffrée restaure les données textuelles brutes à partir du message 'u' reçu, impliquant des vérifications d'intégrité et d'authenticité à l'aide du code d'authentification de message MAC_{Sender}(APDU') puis un déchiffrement des données chiffrées. Les techniques de vérification de l'intégrité et de l'authenticité du message 'u' à l'aide d'un code MAC sont largement connues et donc ne sont pas détaillées dans le présent document.

Les données textuelles ainsi déchiffrées peuvent être utilisées par l'application embarquée pour divers traitements, incluant l'exécution de la commande APDU envoyée voire l'exécution de commandes subséquentes.

Ce schéma de traitement n'est cependant pas satisfaisant. En effet, dès lors que les données textuelles ont été déchiffrées, il n'existe plus de moyen permettant à la carte à circuit intégré de continuer à s'assurer de l'authenticité des données ainsi déchiffrées et de leur intégrité. Ainsi, ces données déchiffrées sont vulnérables et peuvent être modifiées de façon malveillante, par exemple par des attaques physiques sur la carte.

La situation actuelle est ainsi paradoxale : d'un côté, les données textuelles sont protégées contre des modifications lors de leur transport, par l'utilisation d'un code d'authentification de message, et de l'autre côté, elles sont susceptibles d'être altérées lors de leur utilisation/traitement par l'application/la carte/le terminal.

Il serait souhaitable pour le terminal ou la carte de disposer de mécanismes permettant de s'assurer que les données en cours d'utilisation sont bien intègres et sont bien celles qui ont été envoyées par une entité légitime et donc authentifiée. Il serait souhaitable que ces mécanismes limitent les calculs supplémentaires et les données supplémentaires nécessaires.

On connaît par ailleurs des algorithmes de chiffrement symétrique par blocs en mode d'enchaînement des blocs, tel que le CBC, comme évoqué par exemple dans les documents "Encryption Modes with Almost Free Message Integrity" (Charanjit S. Jutla, 1 août 2000), US 2004/017913, US 2006/285684 et "Secret Key Cryptography", Dr Arjan Ourresi, 1 janvier 2007).

### RESUME DE L'INVENTION

Dans ce contexte, la présente invention propose un procédé de traitement tel que défini par la revendication 1.

L'obtention du message inclut la réception d'un tel message, par exemple par une carte ou élément sécurisé en provenance d'un terminal, ou par un terminal en provenance d'une telle carte ou d'un tel élément sécurisé.

La présente invention renforce le contrôle de l'intégrité et de l'authenticité des données brutes, soit reçues, soit générées pour transmission.

Ce renforcement est obtenu par l'utilisation inventive d'une propriété des algorithmes de chiffrement symétrique par blocs en mode d'enchaînement des blocs. En effet, pour de tels algorithmes, le dernier bloc des données brutes chiffrées dépend de l'ensemble des blocs constitutifs des données à chiffrer. Il peut ainsi constituer une donnée d'intégrité authentique des données brutes. En effet, l'authenticité du dernier bloc est garantie par la présence du code d'authentification de message.

A titre d'exemple, les algorithmes de chiffrement symétrique par blocs incluent notamment l'AES, le DES, les algorithmes selon la norme ISO/IEC 18033-3, les algorithmes Camellia, HIGHT, Blowfish, Serpent ou Twofish.

Le mode d'opération dit « par enchaînement des blocs » est également connu dans la littérature anglo-saxonne sous l'appellation « *Cipher Block Chaining* » ou CBC, et inclut les dérivés du CBC, tel le CCMP (« *Counter-Mode*/*CBC-Mac protocol* »). Une définition de ce mode d'opération est fourni dans la norme ISO/IEC 10116.

Le mode d'opération « par enchaînement des blocs » requiert que les données brutes à coder soient découpées en blocs (généralement de 32 à 512 bits, communément de 128 bits). Il consiste en un chiffrement en cascade où chaque bloc courant de données brutes est chiffré en fonction du bloc chiffré précédent. En pratique, le bloc courant non chiffré est XORed (OU Exclusif) avec le bloc chiffré précédent. Le résultat est chiffré avec la clé symétrique (de l'algorithme de chiffrement symétrique par blocs) et le résultat obtenu est le bloc chiffré courant. Ainsi, chaque bloc chiffré dépend de l'ensemble des blocs de données brutes déjà traités à ce moment.

En outre, comme l'authenticité de ce dernier bloc est vérifiée en même temps que celle du message à l'aide du code d'authentification de message, ce dernier bloc assure à la fois l'intégrité et l'authenticité des données brutes déchiffrées, lorsque celles-ci sont utilisées ultérieurement. Un lien avec l'émetteur initial des données chiffrées reçues est ainsi conservé.

Corrélativement, l'invention concerne également un dispositif de traitement, par exemple une carte à puce ou un terminal lecteur de carte, tel que défini par la revendication 12.

L'invention a également pour objet un produit programme d'ordinateur comprenant des instructions adaptées à la mise en oeuvre de chacune des étapes du procédé décrit précédemment lorsque ledit programme est exécuté sur un ordinateur.

Le dispositif et le produit programme d'ordinateur selon l'invention présentent des avantages similaires à ceux exposés précédemment en lien avec le procédé.

D'autres caractéristiques des procédé et dispositif selon des modes de réalisation sont décrites dans les revendications dépendantes, essentiellement à l'aide d'une terminologie de procédé, transposables par conséquent au dispositif.

Dans un mode de réalisation, l'intégrité des données brutes mémorisées est vérifiée périodiquement à l'aide dudit dernier bloc mémorisé. On s'assure ainsi que les données brutes qui sont utilisées dans divers traitements restent celles effectivement reçues de l'expéditeur légitime.

Dans un mode de réalisation, le traitement ultérieur est l'exécution d'une commande reçue ultérieurement audit message, ladite commande mettant en oeuvre lesdites données brutes mémorisées.

Par exemple, les données brutes peuvent consister en une clé ou un code de hachage ou « empreinte numérique », et la commande reçue ultérieurement peut inclure un cryptogramme ou une signature et demander le décodage du cryptogramme ou la vérification de la signature à l'aide respectivement de la clé ou du code de hachage reçu précédemment. Ainsi, lorsque la clé ou le code de hachage doit être utilisé, la vérification de son intégrité authentique à l'aide du dernier bloc chiffré mémorisé peut être conduite selon les enseignements de la présente invention.

Dans un autre mode de réalisation, ledit dernier bloc est mémorisé en mémoire d'une carte à circuit intégré. Cette disposition a notamment lieu lorsque la carte à circuit intégré établit un canal de communication sécurisé (Secure Channel) avec un terminal externe.

Dans un mode de réalisation, le procédé peut comprendre la génération d'un deuxième message comme défini par la revendication 5.

Dans cette configuration du côté génération puis transmission, l'utilisation du dernier bloc constitutif des données brutes chiffrées pour garantir l'intégrité de celles-ci assure qu'aucune altération des données ne s'est produite depuis qu'une information d'intégrité/authenticité initiale a été calculée. On évite ainsi que des données altérées puissent être envoyées de façon authentique.

Dans un mode de réalisation, on vérifie l'intégrité des données brutes du deuxième message en comparant le dernier bloc constituant les données brutes chiffrées du deuxième message avec l'information d'intégrité et/ou d'authenticité.

Dans un mode de réalisation, on remplace, dans les données brutes chiffrées générées du deuxième message, le dernier bloc par l'information d'intégrité et/ou d'authenticité. Ainsi, en cas d'absence d'intégrité, celle-ci sera détectée par le destinataire du message à l'aide du code d'authentification de message calculé sur la base du dernier bloc avant remplacement.

Ces deux dispositions peuvent être combinées, par exemple le remplacement ayant lieu uniquement si la comparaison est positive.

Dans un mode de réalisation, le procédé comprend en outre une étape d'établissement (souvent préalable) d'un canal sécurisé (par exemple un canal SCP02 ou SCP03) entre un terminal et une carte à circuit intégré. Ledit mode de chiffrement et d'authentification est alors défini pour le canal sécurisé, et ledit ou lesdits messages générés est/sont transmis sur le canal sécurisé (soit parce que l'étape d'obtention consiste à recevoir le message, soit parce qu'il est transmis une fois que l'on s'est assuré que le dernier bloc vaut l'information d'intégrité et/ou d'authenticité).

Dans un autre mode de réalisation, ledit message comprend une commande APDU selon la norme ISO/IEC 7816.

Egalement, dans un autre mode de réalisation, le procédé comprend en outre, à réception d'une commande particulière, le basculement d'un premier mode de fonctionnement vers un second mode de fonctionnement, l'un des modes de fonctionnement mettant en oeuvre l'utilisation du dernier bloc constituant les données brutes chiffrées comme donnée d'intégrité et/ou d'authenticité des données brutes, et l'autre mode de fonctionnement ne mettant pas en oeuvre une telle utilisation. Cette disposition permet d'activer ou désactiver à la demande le mécanisme selon l'invention.

### BREVE DESCRIPTION DES FIGURES

D'autres particularités et avantages de l'invention apparaîtront encore dans la description ci-après, illustrée par les dessins ci-joints, dans lesquels :
- la **Figure 1** illustre des échanges classiques lors de la transmission d'une commande APDU depuis un terminal vers une carte à circuit intégré ;
- la **Figure 2** représente schématiquement les éléments principaux d'une forme de réalisation possible pour un dispositif de traitement, tel une carte à microcircuit ;
- la **Figure 3** représente l'allure physique générale d'une carte à microcircuit ;
- la **Figure 4** illustre un premier scénario de mise en oeuvre de l'invention ;
- la **Figure 5** illustre un exemple de commandes APDU mettant en oeuvre ce premier scénario de l'invention ; et
- la **Figure 6** illustre un second scénario de mise en oeuvre de l'invention.

### DESCRIPTION DETAILLEE DE L'INVENTION

La **Figure 2** représente schématiquement un dispositif de traitement de données 40 dans lequel la présente invention est mise en oeuvre. Ce dispositif 40 comprend un microprocesseur 10, auquel est associée d'une part une mémoire vive 60, par exemple au moyen d'un bus 70, et d'autre part une mémoire non volatile 20 (par exemple du type EEPROM), par exemple à travers un bus 50.

Le dispositif de traitement de données 40, et précisément le microprocesseur 10 qu'il incorpore, peuvent échanger des données ou messages avec des dispositifs extérieurs au moyen d'une interface de communication 30.

La mémoire non volatile 20 par exemple ROM (acronyme de *Read Only Memory* en terminologie anglo-saxonne) peut constituer un support au sens de l'invention, c'est-à-dire peut comprendre un programme informatique comprenant des instructions pour la mise en oeuvre d'un procédé selon un mode de réalisation de l'invention ; cette mémoire non volatile peut également être une mémoire EEPROM (acronyme de *Electrically Erasable Read Only Memory* en terminologie anglo-saxonne) ou encore une mémoire Flash.

La mémoire vive ou mémoire cache ou mémoire volatile 60 par exemple RAM (acronyme de *Random Access Memory* en terminologie anglo-saxonne) comprend des registres adaptés à l'enregistrement des variables et paramètres créés et modifiés au cours de l'exécution du programme précité ; lors de la mise en oeuvre de l'invention, les codes d'instructions du programme stocké en mémoire morte ROM, EEPROM ou Flash sont chargés en mémoire RAM en vue d'être exécutés par l'unité de traitement CPU.

On a schématiquement représenté sur la **Figure 2** la transmission d'une donnée d'entrée X reçue d'un dispositif extérieur (non représenté) et transmise de l'interface de communication 30 au microprocesseur 10. De manière similaire, on a représenté la transmission d'une donnée de sortie Y du microprocesseur 10 vers l'interface de communication 30 à destination d'un dispositif extérieur. Cette donnée de sortie Y est issue d'un traitement de données par le microprocesseur 10, généralement sur la donnée d'entrée X.

Bien que, pour l'illustration, les données d'entrée et les données de sortie figurent sur deux flèches différentes, les moyens physiques qui permettent la communication entre le microprocesseur 10 et l'interface 30 pourront être réalisés par des moyens uniques, par exemple un port de communication série ou un bus.

Le microprocesseur 10 est apte à exécuter un logiciel (ou programme d'ordinateur) qui permet au dispositif de traitement de données 40 d'exécuter un procédé conforme à l'invention dont des exemples sont donnés dans la suite. Le logiciel est composé d'une série d'instructions de commande du microprocesseur 10 qui sont par exemple stockées dans la mémoire 20.

En variante, l'ensemble microprocesseur 10 - mémoire non-volatile 20 - mémoire vive 60 peut être remplacé par un circuit à application spécifique qui comprend alors des moyens de mise en oeuvre des différentes étapes du procédé de traitement de données.

La **Figure 3** représente une carte à microcircuit qui constitue un exemple de dispositif de traitement de données conforme à l'invention tel que représenté à la **Figure 2****.** En variante à la carte à microcircuit, type carte à puce ICC ou UICC, le dispositif de traitement peut être un élément sécurisé éventuellement embarqué (SE ou eSE) ou une carte micro SD ou tout autre module sécurisé. Un autre exemple de dispositif de traitement conforme à l'invention inclut un terminal lecteur d'une telle carte à microcircuit ou module sécurisé.

L'interface de communication 30 est dans ce cas réalisée au moyen des contacts de la carte à microcircuit. La carte à microcircuit incorpore un microprocesseur 10, une mémoire vive 60 et une mémoire non volatile 20 comme cela est représenté sur la **Figure 2****.**

Cette carte à microcircuit est par exemple conforme à la norme ISO 7816 et munie d'un microcontrôleur sécurisé qui regroupe le microprocesseur (ou CPU) 20 et la mémoire vive 60.

En variante, le dispositif de traitement de données peut être une clef USB, un document ou un support d'informations papier comportant dans l'une de ses feuilles un microcircuit associé à des moyens de communication sans contact. Il s'agit de manière préférée d'une entité électronique portable ou de poche.

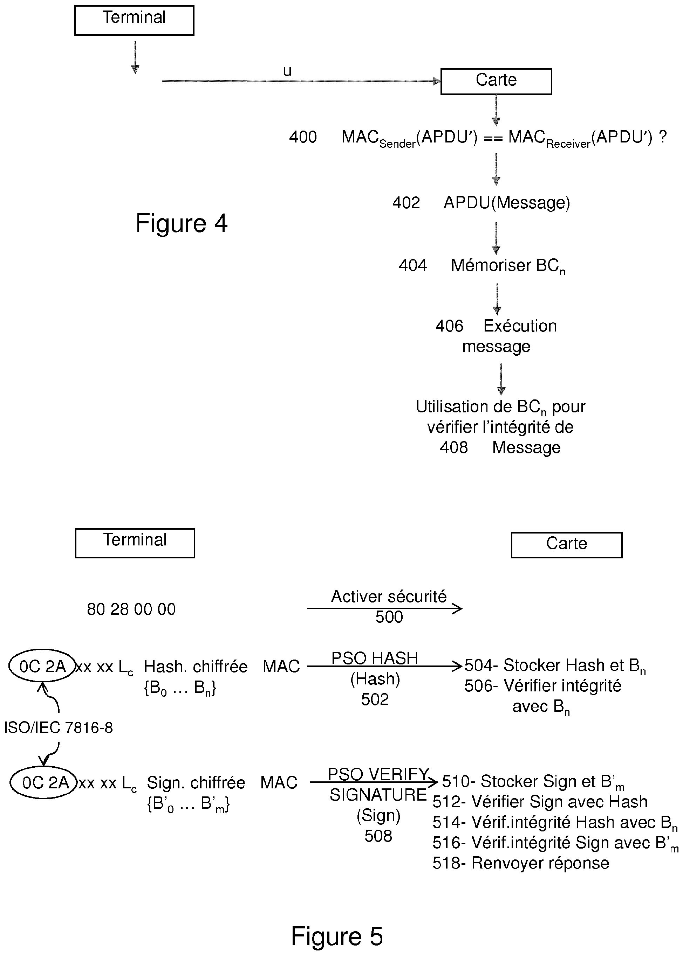

En référence aux **Figures 4** à **6**, on décrit maintenant différents exemples de mises en oeuvre du procédé selon l'invention, principalement au niveau d'une carte à microcircuit bien que l'invention puisse être mise en oeuvre dans tout type de dispositif de traitement de données incluant un terminal lecteur d'une telle carte.

Le contexte de l'invention est celui d'un message généré selon un mode de chiffrement et d'authentification, le message incluant des données brutes chiffrées selon un algorithme de chiffrement symétrique par blocs (type AES, DES, etc.) en mode d'enchaînement des blocs (type CBC) et incluant un code d'authentification de message.

Le code d'authentification de message, type code MAC, est calculé à partir des données brutes chiffrées, et éventuellement à partir d'autres informations formant le message, telles qu'un en-tête.

Le chiffrement par blocs consiste à découper les données à chiffrer en blocs successifs {b₀, b₁, ..., bₙ} dont la taille (en bits) est fonction de l'algorithme choisi, par exemple en blocs de 128 bits chacun, et à chiffrer successivement chaque bloc notamment dans l'ordre initial (composant les données à chiffrer) pour obtenir des blocs chiffrés correspondants {B₀, B₁, ..., Bₙ} de 128 bits chacun par exemple.

En outre, en mode d'enchaînement des blocs (type CBC), le bloc précédent chiffré Bᵢ₋₁ est utilisé pour chiffrer le bloc suivant bᵢ en Bᵢ. Généralement le bloc précédent Bᵢ₋₁ est utilisé dans une logique OU EXCLUSIF (XOR) avec le bloc à chiffrer suivant bᵢ, avant l'opération de chiffrement à proprement parler.

Selon l'invention, le dernier bloc constituant les données brutes chiffrées, i.e. Bₙ, est utilisé comme donnée d'intégrité et/ou d'authenticité des données brutes.

La **Figure 4** illustre un premier scénario dans lequel l'utilisation dudit dernier bloc des données chiffrées comme donnée d'intégrité permet de renforcer la confiance que la carte (ou plus précisément l'application embarquée destinataire du message) manipule bien les données brutes telles qu'envoyées par l'expéditeur légitime.

Dans ce premier scénario, les étapes côté terminal sont identiques à celles de la **Figure 1****.**

Du côté de la carte, outre la réception du message chiffré du terminal, l'intégrité et l'authenticité du message reçu est vérifiée à l'aide du code d'authentification de message MAC_{Sender}(APDU') lors d'une étape 400. Pour ce faire, la carte calcule un deuxième code d'authentification du message MAC_{Receiver}(APDU') à partir des données chiffrées APDU' reçues. La comparaison entre ces deux codes permet de détecter un éventuel défaut d'intégrité et/ou d'authenticité, conduisant au rejet du message, éventuellement à l'émission d'un message d'erreur, et à la fin du procédé.

De même les données brutes sont déchiffrées et mémorisées lors d'une étape 402, ce qui était déjà le cas dans la **Figure 1****.**

Pour la mise en oeuvre de l'invention selon ce premier scénario, le dernier bloc Bₙ constituant les données brutes chiffrées est conservé par la carte (par exemple mémorisé dans la mémoire EEPROM de la carte) lors d'une étape 404, contrairement aux procédés connus où les données chiffrées sont toutes supprimées une fois le déchiffrement effectué et les données brutes déchiffrées obtenues. Bien entendu, cette mémorisation peut avoir lieu avant le déchiffrement.

Le message déchiffré peut alors être exécuté lors d'une étape 406.

Compte tenu du mécanisme (CBC) ayant initialement généré ce dernier bloc Bₙ, celui-ci dépend de l'ensemble des données brutes, c'est-à-dire de l'ensemble des blocs {b₀, b₁, ..., bₙ}. Il constitue donc une donnée d'intégrité pertinente des données brutes. En outre, étant garanti par le code d'authentification de message MAC_{Sender}(APDU'), il constitue également une preuve de l'authenticité des données brutes.

Dans ce contexte, le dernier bloc Bₙ peut être utilisé pour vérifier l'intégrité et l'authenticité des données brutes mémorisées lors d'un traitement ultérieur desdites données brutes mémorisées. C'est l'étape 408.

Il peut s'agir d'une vérification périodique des données brutes mémorisées afin de garantir au long-court leur intégrité authentique, c'est-à-dire leur intégrité telle que transmise par l'expéditeur légitime (ici le terminal). On peut comprendre ici par « périodique » une opération reproduite lors des étapes de traitement de commandes, par exemple lors de l'exécution ou de l'envoi des commandes.

Ainsi, toute altération de ces données brutes par une attaque externe (par exemple une attaque par faute) est facilement détectée puisqu'il en résultera une différence entre la donnée d'intégrité authentique pour Bₙ et une donnée d'intégrité de contrôle, calculée de façon similaire (MAC-CBC équivalent à la norme ISO/IEC 9797-1 - MAC algorithm 1) par le récipiendaire à partir des données brutes altérées. La donnée d'intégrité est typiquement un code d'authentification de message (MAC).

En cas de détection d'une altération, la carte ou l'application manipulant lesdites données brutes altérées peut prendre des actions sécuritaires bien connues de l'homme de l'art.

Afin de permettre à la carte de déterminer si le message ou la commande APDU reçue est selon le mécanisme de l'invention (afin de mémoriser Bₙ et ensuite de procéder aux vérifications d'intégrité et/ou d'authenticité), un drapeau dans l'entête du message ou de la commande peut être activé par le dispositif expéditeur.

La **Figure 5** illustre un exemple de commandes APDU mettant en oeuvre ce premier scénario de l'invention.

Dans cet exemple, les données brutes peuvent consister en une clé ou un code de hachage (autrement connu sous la terminologie « empreinte numérique »), et la commande reçue ultérieurement peut inclure un cryptogramme ou une signature et demander le décodage du cryptogramme ou la vérification de la signature à l'aide respectivement de la clé ou du code de hachage reçu précédemment. Ainsi, lorsque la clé ou le code de hachage doit être utilisé, la vérification de son intégrité authentique à l'aide du dernier bloc chiffré mémorisé peut être conduite selon les enseignements de la présente invention.

Un canal sécurisé étant établi entre le terminal et la carte (ce qui permet de convenir de clés de session pour chiffrer les données), un premier message du terminal indique, à l'aide d'un drapeau « 80 28 00 00 » (INS = ENABLE VERIFICATION REQUIREMENT cf ISO/IEC 7816-4 avec une classe propriétaire, que le mécanisme de sécurité selon l'invention est activé. C'est l'étape 500. A noter que le basculement inverse vers une désactivation de la fonctionnalité de sécurisation peut être obtenu par l'envoi de la commande « 80 26 00 00 » (INS = DISABLE VERIFICATION REQUIREMENT cf ISO/IEC 7816-4 avec une classe propriétaire).

Bien entendu d'autres valeurs de drapeau pour commander un tel basculement peuvent être prévues.

Une première commande PSO HASH (cf ISO/IEC 7816-8) est transmise à l'étape 502, première commande sécurisée comprenant un code de hachage à stocker, le code de hachage étant chiffré par blocs en mode CBC, et comprenant un code d'authentification MAC calculé sur le code de hachage chiffré (et éventuellement sur les en-têtes) complétant la commande.

A réception, la carte déroule la commande reçue en vérifiant l'authenticité et l'intégrité de la commande reçue à l'aide du code MAC puis en déchiffrant et mémorisant le code de hachage. C'est l'étape 504.

Conformément à l'invention, le dernier bloc Bₙ est conservé en mémoire EEPROM ou autre, au lieu d'être supprimé. C'est l'étape 506.

Lors du traitement de la première commande reçue, une vérification de l'intégrité du code de hachage stocké peut être conduite à l'aide de Bₙ ainsi stocké, en calculant une donnée d'intégrité de contrôle équivalente (MAC-CBC) à partir du code de hachage stocké. Cela permet de renforcer les contrôles d'intégrité et d'authenticité de la donnée traitée.

Ultérieurement (par exemple après réception d'un acquittement d'exécution de la première commande), le terminal envoie une seconde commande APDU de demande de vérification de signature (par exemple PSO VERIFY SIGNATURE comme décrit dans ISO/IEC 7816-8), commande sécurisée dans laquelle ladite signature est chiffrée symétriquement par blocs en mode CBC. Un code MAC est aussi ajouté sur la commande. C'est l'étape 508.

A réception, la carte vérifie le code MAC avant de déchiffrer la signature reçue et de mémoriser le dernier bloc B'ₘ de la signature chiffrée en mémoire EEPROM. C'est l'étape 510.

La carte exécute la commande reçue, à savoir vérifie la signature déchiffrée à l'aide du code de hachage en mémoire, c'est-à-dire précédemment déchiffré. C'est l'étape 512. Si la vérification s'avère négative, un message d'erreur peut être renvoyé.

Si la vérification est positive, la carte procède ici à une double vérification de l'intégrité et de l'authenticité du code de hachage et de la signature utilisés. Ainsi, la carte ne confirmera la vérification positive de la signature que si les données qu'elle mémorise n'ont pas été altérées dans l'intervalle, à savoir entre la préparation des données par le terminal et le traitement par la carte. Selon l'invention, elle utilise une donnée d'intégrité authentique, les blocs Bₙ et B'ₘ en l'espèce.

Cette double vérification comprend le calcul d'une donnée d'intégrité de contrôle, type code d'authentification MAC-CBC, pour le code de hachage stocké en mémoire et également une donnée d'intégrité de contrôle (MAC-CBC) pour la signature stockée. Ces données d'intégrité de contrôle sont comparées aux blocs Bₙ et B'ₘ respectivement. Ce sont les étapes 514 (pour le code de hachage) et 516 (pour la signature). Si l'une de ces comparaisons est négative, un message d'erreur est envoyé. Sinon, un message de vérification positive de la signature peut être envoyé au terminal (étape 518).

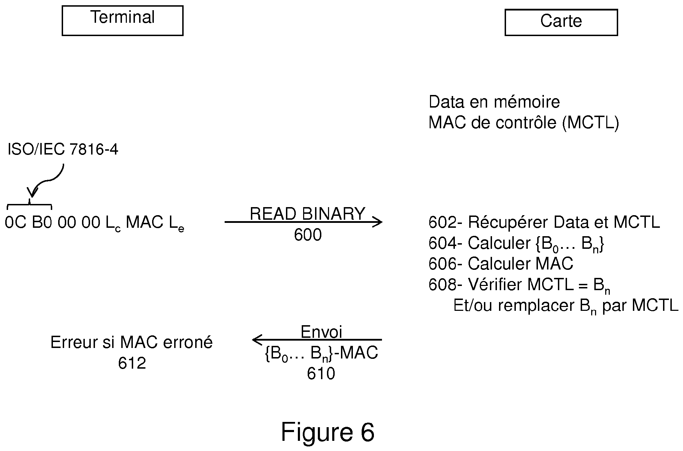

La **Figure 6** illustre un second scénario dans lequel le dernier bloc des données chiffrées est utilisé comme donnée d'intégrité et d'authenticité pour protéger des données sortantes encapsulées dans un canal sécurisé préalablement établi, protection contre d'une éventuelle altération survenue pendant les opérations de chiffrement et de signature (code MAC). Ce second scénario vise à garantir que la carte, par exemple, envoie de façon authentique des données non altérées.

Dans ce scénario, la carte par exemple stocke en mémoire des données brutes (éventuellement reçues selon le scénario exposé ci-dessus en lien avec les **Figures 4** et **5**), ainsi qu'une information (MTCL) d'intégrité et éventuellement d'authenticité de celles-ci (comme Bₙ reçu dans le scénario exposé ci-dessus en lien avec les **Figures 4** et **5**). Finalement, l'information d'intégrité a été calculée en utilisant le même algorithme symétrique par blocs que celui utilisé pour chiffrer des données brutes sur le canal de communication, à savoir du MAC-CBC (permettant au final de conserver uniquement le dernier bloc calculé).

A réception d'une commande (600) demandant l'obtention des données brutes (par exemple une commande APDU READ BINARY (comme décrit dans ISO/IEC 7816-4)) de la part du terminal, la carte récupère les données brutes en mémoire, et calcule l'information d'intégrité correspondante (ou la récupère en mémoire si elle est disponible, c'est-à-dire préalablement calculée), puis génère un message selon un mode de chiffrement et d'authentification, le message incluant les données brutes récupérées chiffrées selon un algorithme de chiffrement symétrique par blocs en mode d'enchaînement des blocs et incluant un code d'authentification de message. On obtient les blocs chiffrés {B₀, B₁, ..., Bₙ} à l'étape 604.

Il s'ensuit le calcul du code d'authentification de message MAC, selon des techniques classiques. C'est l'étape 606.

Puis la carte s'assure que le dernier bloc Bₙ constituant les données brutes chiffrées correspond à l'information d'intégrité (MTCL) préalablement calculée. Cette opération 608 vise à garantir l'intégrité et l'authenticité des données brutes du message avant de transmettre le message généré, c'est-à-dire à notamment garantir qu'elles n'ont pas été altérées lors de l'étape d'encapsulation dans le canal sécurisé préalablement établi.

Si la comparaison s'avère négative, la carte a détecté une altération des données brutes (éventuellement à raison d'une attaque externe) et un message d'erreur (610) est retourné au terminal. Des mesures sécuritaires peuvent alors être prises.

Dans une variante de réalisation, le dernier bloc Bₙ constituant les données brutes chiffrées est remplacé, dans le message de sortie encapsulé dans le canal sécurisé préalablement établi, par l'information d'intégrité MTCL préalablement calculée. Le message ainsi obtenu est transmis au terminal comme réponse à la commande READ BINARY (étape 610).

Le terminal vérifie (étape 612) alors l'intégrité et l'authenticité de la réponse reçue à l'aide du code MAC. Si le code MAC ne correspond pas à la réponse transmise, cela indique au terminal que l'information d'intégrité MTCL remplacée par la carte/SE avant la transmission du message ne concorde pas avec le code MAC. Partant, cela implique que le dernier bloc des données brutes chiffrées utilisé dans le calcul du MAC par la carte/SE ne correspond pas à celui remplacé avant l'envoi de la réponse, et donc que les données brutes ont été altérées lors de leur manipulation jusqu'au calcul du MAC (c'est-à-dire lors de leur manipulation, chiffrement, et calcul du MAC).

Ainsi, le terminal a détecté une altération des données brutes. Des mesures sécuritaires peuvent alors être prises à l'encontre de la carte.

## Revendications

1. Procédé de traitement comprenant :
- une étape consistant à recevoir (502), d'un dispositif externe, un premier message généré selon un mode de chiffrement et d'authentification, le premier message incluant des données brutes chiffrées (B₀, Bₙ) selon un algorithme de chiffrement symétrique par blocs en mode d'enchaînement des blocs et incluant un premier code d'authentification de message ;
- une première étape de vérification (400, 504) de l'intégrité et l'authenticité du premier message reçu à l'aide du premier code d'authentification de message ;
- une étape consistant à déchiffrer (402, 504) les données brutes (b₀, bₙ) et à mémoriser les données brutes déchiffrées ;
- une étape consistant à mémoriser (404, 506) le dernier bloc (Bₙ) constituant les données brutes chiffrées ; puis
- une étape de traitement ultérieur utilisant les données brutes déchiffrées et mémorisées,
**caractérisé en ce que** l'étape de traitement ultérieur utilisant les données brutes déchiffrées et mémorisées comprend une deuxième étape de vérification (408, 514) de l'authenticité et/ou l'intégrité des données brutes déchiffrées et mémorisées en utilisant le dernier bloc (Bₙ) constituant les données brutes chiffrées ainsi mémorisé.

2. Procédé selon la revendication 1, dans lequel l'étape de traitement ultérieur comprend l'exécution d'une commande reçue (508) ultérieurement audit premier message (502), ladite commande mettant en oeuvre lesdites données brutes mémorisées.

3. Procédé selon la revendication 1 ou 2, dans lequel l'intégrité des données brutes mémorisées est vérifiée périodiquement à l'aide dudit dernier bloc mémorisé (Bₙ).

4. Procédé selon l'une des revendications 1 à 3, dans lequel ledit dernier bloc est mémorisé en mémoire d'une carte à circuit intégré (30, 40).

5. Procédé selon l'une des revendications 1 à 4, comprenant en outre les étapes suivantes :
- récupérer les données brutes déchiffrées (b₀, bₙ) en mémoire et obtenir une information (MCTL) d'intégrité et/ou d'authenticité desdites données brutes calculée à l'aide d'un algorithme de chiffrement symétrique par blocs en mode d'enchaînement des blocs ;
- générer (604) un deuxième message selon un mode de chiffrement et d'authentification, le deuxième message incluant les données brutes récupérées chiffrées selon un algorithme de chiffrement symétrique par blocs en mode d'enchaînement des blocs et incluant un deuxième code d'authentification de message ; et
- s'assurer (608) que le dernier bloc constituant les données brutes chiffrées du deuxième message vaut l'information d'intégrité et/ou d'authenticité (MCTL), afin de garantir l'intégrité et/ou l'authenticité des données brutes du deuxième message avant de transmettre le deuxième message généré.

6. Procédé selon la revendication 5, dans lequel on vérifie l'intégrité des données brutes du deuxième message en comparant le dernier bloc constituant les données brutes chiffrées du deuxième message avec l'information d'intégrité et/ou d'authenticité.

7. Procédé selon la revendication 5 ou 6, dans lequel on remplace, dans les données brutes chiffrées générées du deuxième message, le dernier bloc par l'information d'intégrité et/ou d'authenticité.

8. Procédé selon l'une des revendications 5 à 7, dans lequel l'information (MCTL) d'intégrité et/ou d'authenticité obtenue est le dernier bloc (Bₙ) mémorisé constituant les données brutes chiffrées du premier message.

9. Procédé selon l'une des revendications précédentes, comprenant en outre une étape d'établissement d'un canal sécurisé entre un terminal et une carte à circuit intégré, ledit mode de chiffrement et d'authentification étant défini pour le canal sécurisé, et ledit ou lesdits messages générés étant transmis (502, 610) sur le canal sécurisé.

10. Procédé selon l'une des revendications précédentes, dans lequel ledit premier message comprend une commande APDU selon la norme ISO/IEC 7816.

11. Procédé selon l'une des revendications précédentes, comprenant en outre, à réception d'une commande particulière, le basculement d'un premier mode de fonctionnement vers un second mode de fonctionnement, l'un des modes de fonctionnement mettant en oeuvre l'utilisation du dernier bloc constituant les données brutes chiffrées comme donnée d'intégrité et/ou d'authenticité des données brutes déchiffrées et mémorisées, et l'autre mode de fonctionnement ne mettant pas en oeuvre une telle utilisation.

12. Dispositif de traitement (30, 40) comprenant un processeur (10) configuré pour :
- recevoir, d'un dispositif externe, un premier message généré selon un mode de chiffrement et d'authentification, le message incluant des données brutes chiffrées (B₀, Bₙ) selon un algorithme de chiffrement symétrique par blocs en mode d'enchaînement des blocs et incluant un premier code d'authentification de message ;
- vérifier, lors d'une première étape de vérification, l'intégrité et l'authenticité du premier message reçu à l'aide du premier code d'authentification de message ;
- déchiffrer les données brutes (b₀, bₙ) et mémoriser les données brutes déchiffrées ;
- mémoriser le dernier bloc (Bₙ) constituant les données brutes chiffrées ; puis
- effectuer un traitement ultérieur utilisant les données brutes déchiffrées et mémorisées,
**caractérisé en ce qu'**il est en outre configuré pour que l'étape de traitement ultérieur utilisant les données brutes déchiffrées et mémorisées comprenne une deuxième étape de vérification de l'intégrité des données brutes déchiffrées et mémorisées en utilisant le dernier bloc (Bₙ) constituant les données brutes chiffrées ainsi mémorisé.

13. Dispositif de traitement selon la revendication 12, dans lequel l'étape de traitement ultérieur comprend l'exécution d'une commande reçue ultérieurement audit premier message, ladite commande mettant en oeuvre lesdites données brutes mémorisées.

14. Dispositif de traitement selon la revendication 12 ou 13, configuré pour vérifier périodiquement l'intégrité des données brutes mémorisées à l'aide dudit dernier bloc mémorisé.

15. Dispositif de traitement selon l'une des revendications 12 à 14, configuré pour :
- récupérer les données brutes déchiffrées (b₀, bₙ) en mémoire et obtenir une information d'intégrité et/ou d'authenticité (MCTL) desdites données brutes calculée à l'aide d'un algorithme de chiffrement symétrique par blocs en mode d'enchaînement des blocs ;
- générer un deuxième message selon un mode de chiffrement et d'authentification, le deuxième message incluant les données brutes récupérées chiffrées selon un algorithme de chiffrement symétrique par blocs en mode d'enchaînement des blocs et incluant un deuxième code d'authentification de message ; et
- s'assurer que le dernier bloc (Bₙ) constituant les données brutes chiffrées du deuxième message vaut l'information d'intégrité et/ou d'authenticité (MCTL), afin de garantir l'intégrité et/ou d'authenticité des données brutes du deuxième message avant de transmettre le deuxième message généré.

16. Dispositif de traitement selon la revendication 15, en outre configuré pour vérifier l'intégrité des données brutes du deuxième message en comparant le dernier bloc constituant les données brutes chiffrées du deuxième message avec l'information d'intégrité et/ou d'authenticité.

17. Dispositif de traitement selon la revendication 15 ou 16, en outre configuré pour remplacer, dans les données brutes chiffrées générées du deuxième message, le dernier bloc par l'information d'intégrité et/ou d'authenticité.

18. Dispositif de traitement selon l'une des revendications 15 à 17, dans lequel l'information (MCTL) d'intégrité et/ou d'authenticité obtenue est le dernier bloc (Bₙ) mémorisé constituant les données brutes chiffrées du premier message.

19. Dispositif de traitement selon l'une des revendications 12 à 18, en outre configuré pour, à réception d'une commande particulière, basculer d'un premier mode de fonctionnement vers un second mode de fonctionnement, l'un des modes de fonctionnement mettant en oeuvre l'utilisation du dernier bloc constituant les données brutes chiffrées comme donnée d'intégrité et/ou d'authenticité des données brutes déchiffrées et mémorisées, et l'autre mode de fonctionnement ne mettant pas en oeuvre une telle utilisation.

20. Dispositif de traitement selon l'une des revendications 12 à 19, de type carte à circuit intégré ou élément sécurisé équipant un terminal mobile.

21. Produit programme d'ordinateur comprenant des instructions adaptées à la mise en oeuvre de chacune des étapes du procédé selon l'une des revendications 1 à 11 lorsque ledit programme est exécuté sur un ordinateur.

## Patentansprüche

1. Verarbeitungsverfahren, umfassend:
- einen Schritt, der daraus besteht, von einer externen Vorrichtung, eine erste Nachricht zu empfangen (502), die gemäß einem Chiffrier- und Authentifizierungsmodus generiert wird, wobei die erste Nachricht Rohdaten (B₀, Bₙ) enthält, die gemäß einem symmetrischen Chiffrieralgorithmus durch Blöcke in einem Blockverkettungsmodus chiffriert werden und einen ersten Nachrichtenauthentifizierungscode enthalten;
- einen ersten Schritt der Verifikation (400, 504) der Integrität und der Authentizität der ersten Nachricht, die empfangen wird, mit Hilfe des ersten Nachrichtenauthentifizierungscodes;
- einen Schritt, der daraus besteht, die Rohdaten (b₀, bₙ) zu dechiffrieren (402, 504) und die dechiffrierten Rohdaten zu speichern;
- einen Schritt, der daraus besteht, den letzten Block (Bₙ) zu speichern (404, 506), der die chiffrierten Rohdaten darstellt; anschließend
- einen letzten Verarbeitungsschritt unter Verwendung der dechiffrierten und gespeicherten Rohdaten;
**dadurch gekennzeichnet, dass** der letzte Verarbeitungsschritt unter Verwendung der dechiffrierten und gespeicherten Rohdaten einen zweiten Schritt der Verifikation (408, 514) der Authentizität und/oder der Integrität der dechiffrierten und gespeicherten Rohdaten unter Verwendung des letzten Blocks (Bₙ) umfasst, der die so gespeicherten chiffrierten Rohdaten darstellt.

2. Verfahren nach Anspruch 1, wobei der letzte Verarbeitungsschritt die Ausführung eines Befehls umfasst, der nach der ersten Nachricht (502) empfangen wird (508), wobei der Befehl die gespeicherten Rohdaten verwendet.

3. Verfahren nach Anspruch 1 oder 2, wobei die Integrität der gespeicherten Rohdaten periodisch mit Hilfe des letzten gespeicherten Blocks (Bₙ) verifiziert wird.

4. Verfahren nach einem der Ansprüche 1 bis 3, wobei der letzte Block im Speicher einer Karte mit einer integrierten Schaltung (30, 40) gespeichert wird.

5. Verfahren nach einem der Ansprüche 1 bis 4, außerdem umfassend die folgenden Schritte:
- Abrufen der dechiffrierten Rohdaten (b₀, bₙ) aus dem Speicher und Erhalten einer Information (MCTL) der Integrität und/oder der Authentizität der Rohdaten, die mit Hilfe eines symmetrischen Chiffrieralgorithmus durch Blöcke in einem Blockverkettungsmodus berechnet wird;
- Generieren (604) einer zweiten Nachricht gemäß einem Chiffrier- und Authentifizierungsmodus, wobei die zweite Nachricht abgerufene Rohdaten enthält, die gemäß einem symmetrischen Chiffrieralgorithmus durch Blöcke in einem Blockverkettungsmodus chiffriert werden und einen zweiten Nachrichtenauthentifizierungscode enthalten; und
- Sicherstellen (608), dass der letzte Block, der die chiffrierten Rohdaten der zweiten Nachricht darstellt, für die Information der Integrität und/oder der Authentizität (MCTL) gilt, um die Integrität und/oder die Authentizität der Rohdaten der zweiten Nachricht zu garantieren, bevor die zweite generierte Nachricht übertragen wird.

6. Verfahren nach Anspruch 5, wobei die Integrität der Rohdaten der zweiten Nachricht verifiziert wird, indem der letzte Block, der die chiffrierten Rohdaten der zweiten Nachricht darstellt, mit der Information der Integrität und/oder der Authentizität verglichen wird.

7. Verfahren nach Anspruch 5 oder 6, wobei, in den generierten chiffrierten Rohdaten der zweiten Nachricht, der letzte Block durch die Information der Integrität und/oder der Authentizität ersetzt wird.

8. Verfahren nach einem der Ansprüche 5 bis 7, wobei die erhaltene Information (MCTL) der Integrität und/oder der Authentizität der letzte gespeicherte Block (Bₙ) ist, der die chiffrierten Rohdaten der ersten Nachricht darstellt.

9. Verfahren nach einem der vorhergehenden Ansprüche, außerdem umfassend einen Schritt der Herstellung eines gesicherten Kanals zwischen einem Endgerät und einer Karte mit einer integrierten Schaltung, wobei der Chiffrier- und Authentifizierungsmodus für den gesicherten Kanal definiert wird, und die generierte Nachricht oder die generierten Nachrichten auf dem gesicherten Kanal übertragen wird oder werden (502, 610) .

10. Verfahren nach einem der vorhergehenden Ansprüche, wobei die erste Nachricht einen Befehl APDU gemäß der Norm ISO/IEC 7816 umfasst.

11. Verfahren nach einem der vorhergehenden Ansprüche, außerdem umfassend, zum Empfang eines bestimmten Befehls, die Umschaltung eines ersten Betriebsmodus zu einem zweiten Betriebsmodus, wobei einer der Betriebsmodi die Verwendung des letzten Blocks, der die chiffrierten Rohdaten darstellt, als Datenwert der Integrität und/oder der Authentizität der dechiffrierten und gespeicherten Rohdaten einsetzt, und der andere Betriebsmodus eine solche Verwendung nicht einsetzt.

12. Verarbeitungsvorrichtung (30, 40), umfassend einen Prozessor (10), der ausgelegt ist:
- von einer externen Vorrichtung, eine erste Nachricht zu empfangen, die gemäß einem Chiffrier- und Authentifizierungsmodus generiert wird, wobei die Nachricht Rohdaten (B₀, Bₙ) enthält, die gemäß einem symmetrischen Chiffrieralgorithmus durch Blöcke in einem Blockverkettungsmodus chiffriert werden und einen ersten Nachrichtenauthentifizierungscode enthalten;
- in einem ersten Schritt der Verifikation, die Integrität und die Authentizität der ersten Nachricht, die empfangen wird, mit Hilfe des ersten Nachrichtenauthentifizierungscodes zu verifizieren;
- die Rohdaten (b₀, bₙ) zu dechiffrieren und die dechiffrierten Rohdaten zu speichern;
- den letzten Block (Bₙ) zu speichern, der die chiffrierten Rohdaten darstellt; anschließend
- eine letzte Verarbeitung unter Verwendung der dechiffrierten und gespeicherten Rohdaten durchzuführen;
**dadurch gekennzeichnet, dass** diese außerdem ausgelegt ist, dass der letzte Verarbeitungsschritt unter Verwendung der dechiffrierten und gespeicherten Rohdaten einen zweiten Schritt der Verifikation der Integrität der dechiffrierten und gespeicherten Rohdaten unter Verwendung des letzten Blocks (Bₙ) umfasst, der die so gespeicherten chiffrierten Rohdaten darstellt.

13. Verarbeitungsvorrichtung nach Anspruch 12, wobei der letzte Verarbeitungsschritt die Ausführung eines Befehls umfasst, der nach der ersten Nachricht empfangen wird, wobei der Befehl die gespeicherten Rohdaten verwendet.

14. Verarbeitungsvorrichtung nach Anspruch 12 oder 13, die ausgelegt ist, die Integrität der gespeicherten Rohdaten periodisch mit Hilfe des letzten gespeicherten Blocks zu verifizieren.

15. Verarbeitungsvorrichtung nach einem der Ansprüche 12 bis 14, welche ausgelegt ist:
- die dechiffrierten Rohdaten (b₀, bₙ) aus dem Speicher abzurufen und eine Information der Integrität und/oder der Authentizität (MCTL) der Rohdaten zu erhalten, die mit Hilfe eines symmetrischen Chiffrieralgorithmus durch Blöcke in einem Blockverkettungsmodus berechnet wird;
- eine zweite Nachricht gemäß einem Chiffrier- und Authentifizierungsmodus zu generieren, wobei die zweite Nachricht die abgerufenen Rohdaten enthält, die gemäß einem symmetrischen Chiffrieralgorithmus durch Blöcke in einem Blockverkettungsmodus chiffriert werden und einen zweiten Nachrichtenauthentifizierungscode enthalten; und
- sicherzustellen, dass der letzte Block (Bₙ), der die chiffrierten Rohdaten der zweiten Nachricht darstellt, für die Information der Integrität und/oder der Authentizität (MCTL) gilt, um die Integrität und/oder die Authentizität der Rohdaten der zweiten Nachricht zu garantieren, bevor die zweite generierte Nachricht übertragen wird.

16. Verarbeitungsvorrichtung nach Anspruch 15, welche außerdem ausgelegt ist, die Integrität der Rohdaten der zweiten Nachricht zu verifizieren, indem der letzte Block, der die chiffrierten Rohdaten der zweiten Nachricht darstellt, mit der Information der Integrität und/oder der Authentizität verglichen wird.

17. Verarbeitungsvorrichtung nach Anspruch 15 oder 16, welche außerdem ausgelegt ist, in den generierten chiffrierten Rohdaten der zweiten Nachricht, den letzten Block durch die Information der Integrität und/oder der Authentizität zu ersetzen.

18. Verarbeitungsvorrichtung nach einem der Ansprüche 15 bis 17, wobei die erhaltene Information (MCTL) der Integrität und/oder der Authentizität der letzte gespeicherte Block (Bₙ) ist, der die chiffrierten Rohdaten der ersten Nachricht darstellt.

19. Verarbeitungsvorrichtung nach einem der Ansprüche 12 bis 18, welche außerdem ausgelegt ist, beim Empfang eines bestimmten Befehls, einen ersten Betriebsmodus zu einem zweiten Betriebsmodus umzuschalten, wobei einer der Betriebsmodi die Verwendung des letzten Blocks, der die chiffrierten Rohdaten darstellt, als Datenwert der Integrität und/oder der Authentizität der dechiffrierten und gespeicherten Rohdaten einsetzt, und der andere Betriebsmodus eine solche Verwendung nicht einsetzt.

20. Verarbeitungsvorrichtung nach einem der Ansprüche 12 bis 19, des Typs einer Karte mit einer integrierten Schaltung oder eines Sicherheitselements, das ein mobiles Endgerät ausstattet.

21. Computerprogrammprodukt, umfassend Instruktionen, die geeignet sind, jeden der Schritte des Verfahrens nach einem der Ansprüche 1 bis 11 durchzuführen, wenn das Programm auf einem Computer ausgeführt wird.

## Claims

1. Method of processing comprising:
- a step consisting in receiving (502), from an external device, a first message generated according to a mode of encryption and of authentication, the first message including raw data encrypted (B₀, Bₙ) according to a block symmetric encryption algorithm in block chaining mode and including a first message authentication code;
- a first step of verification (400, 504) of the integrity and authenticity of the first message received with the aid of the first message authentication code;
- a step consisting in decrypting (402, 504) the raw data (b₀, bₙ) and in storing the decrypted raw data;
- a step consisting in storing (404, 506) the last block (Bₙ) constituting the encrypted raw data; then
- a step of subsequent processing using the decrypted and stored raw data,
**characterized in that** the step of subsequent processing using the decrypted and stored raw data comprises a second step of verification (408, 514) of the authenticity and/or the integrity of the decrypted and stored raw data by using the last block (Bₙ) constituting the encrypted raw data thus stored.

2. Method according to Claim 1, in which the step of subsequent processing comprises the execution of a command received (508) subsequently to said first message (502), said command implementing said stored raw data.

3. Method according to Claim 1 or 2, in which the integrity of the stored raw data is verified periodically with the aid of said last stored block (Bₙ).

4. Method according to one of Claims 1 to 3, in which said last block is stored in memory of an integrated circuit card (30, 40).

5. Method according to one of Claims 1 to 4, furthermore comprising the following steps:
- retrieving the decrypted raw data (b₀, bₙ) in memory and obtaining an information item (MCTL) in respect of integrity and/or authenticity of said raw data and calculated with the aid of a block symmetric encryption algorithm in block chaining mode;
- generating (604) a second message according to a mode of encryption and authentication, the second message including the retrieved raw data encrypted according to a block symmetric encryption algorithm in block chaining mode and including a second message authentication code; and
- ensuring (608) that the last block constituting the encrypted raw data of the second message is equal to the information item in respect of integrity and/or authenticity (MCTL), so as to guarantee the integrity and/or the authenticity of the raw data of the second message before transmitting the second message generated.

6. Method according to Claim 5, in which the integrity of the raw data of the second message is verified by comparing the last block constituting the encrypted raw data of the second message with the information item in respect of integrity and/or authenticity.

7. Method according to Claim 5 or 6, in which, in the generated encrypted raw data of the second message, the last block is replaced with the information item in respect of integrity and/or authenticity.

8. Method according to one of Claims 5 to 7, in which the information item (MCTL) in respect of integrity and/or authenticity obtained is the last block (Bₙ) stored constituting the encrypted raw data of the first message.

9. Method according to one of the preceding claims, further comprising a step of establishing a secure channel between a terminal and an integrated circuit card, said mode of encryption and authentication being defined for the secure channel, and said message or messages generated being transmitted (502, 610) on the secure channel.

10. Method according to one of the preceding claims, in which said first message comprises an APDU command according to the ISO/IEC 7816 standard.

11. Method according to one of the preceding claims, further comprising, on receipt of a particular command, the toggling from a first mode of operation to a second mode of operation, one of the modes of operation implementing the use of the last block constituting the raw data encrypted as an integrity and/or authenticity datum of the decrypted and stored raw data, and the other mode of operation not implementing such a use.

12. Processing device (30, 40) comprising a processor (10) configured to:
- receive, from an external device, a first message generated according to a mode of encryption and authentication, the message including raw data encrypted (B₀, Bₙ) according to a block symmetric encryption algorithm in block chaining mode and including a first message authentication code;
- verify, during a first verification step, the integrity and authenticity of the first message received with the aid of the first message authentication code;
- decrypt the raw data (b₀, bₙ) and store the decrypted raw data;
- store the last block (Bₙ) constituting the encrypted raw data; then
- perform a subsequent processing using the decrypted and stored raw data,
**characterized in that** it is furthermore configured so that the step of subsequent processing using the decrypted and stored raw data comprises a second step of verification of the integrity of the decrypted and stored raw data by using the last block (Bₙ) constituting the encrypted raw data thus stored.

13. Processing device according to Claim 12, in which the step of subsequent processing comprises the execution of a command received subsequently to said first message, said command implementing said stored raw data.

14. Processing device according to Claim 12 or 13, configured to periodically verify the integrity of the raw data stored with the aid of said last stored block.

15. Processing device according to any one of Claims 12 to 14, configured to:
- retrieve the decrypted raw data (b₀, bₙ) in memory and obtain an information item in respect of integrity and/or authenticity (MCTL) of said raw data and calculated with the aid of a block symmetric encryption algorithm in block chaining mode;
- generate a second message according to a mode of encryption and authentication, the second message including the retrieved raw data encrypted according to a block symmetric encryption algorithm in block chaining mode and including a second message authentication code; and
- ensure that the last block (Bₙ) constituting the encrypted raw data of the second message is equal to the information item in respect of integrity and/or authenticity (MCTL), so as to guarantee the integrity and/or authenticity of the raw data of the second message before transmitting the second message generated.

16. Processing device according to Claim 15, further configured to verify the integrity of the raw data of the second message by comparing the last block constituting the encrypted raw data of the second message with the information item in respect of integrity and/or authenticity.

17. Processing device according to Claim 15 or 16, further configured to replace, in the generated encrypted raw data of the second message, the last block by the information item in respect of integrity and/or authenticity.

18. Processing device according to one of Claims 15 to 17, in which the information item (MCTL) in respect of integrity and/or authenticity obtained is the last block (Bₙ) stored constituting the encrypted raw data of the first message.

19. Processing device according to one of Claims 12 to 18, furthermore configured to, on receipt of a particular command, toggle from a first mode of operation to a second mode of operation, one of the modes of operation implementing the use of the last block constituting the raw data encrypted as an integrity and/or authenticity datum of the decrypted and stored raw data, and the other mode of operation not implementing such a use.

20. Processing device according to one of Claims 12 to 19, of integrated circuit card or secure element type equipping a mobile terminal.

21. Computer program product comprising instructions adapted to the implementation of each of the steps of the method according to one of Claims 1 to 11 when said program is executed on a computer.
